# EUROPEAN PATENT APPLICATION

(11) **EP 0 831 051 A1**
(43) Date of publication of application: **25.03.1998**
(21) Application number: 97115620.3
(22) Date of filing: 09.09.1997
(51) Int. Cl.: B66B 11/04, F16H 7/02

(54) **Transmission for use in elevators**

(30) Priority: 20.09.1996 IT BO960468
(71) Applicant: Sassi Alberto S.p.A., 40056 Crespellano (Bologna) (IT)
(72) Inventor: Sassi Alberto, 40141 Bologna (IT)
(74) Representative: Modiano, Guido, Dr.-Ing.

(57) **Abstract**

A transmission for use in elevators, wherein the driving shaft (2) and the driven shaft (3) are parallel to each other and are connected by at least two toothed belts (4a,4b) closed in a loop and wound on respective pairs of toothed pinions (5a,5b) and toothed pulleys (6a,6b) which are keyed on the driving shaft (2) and on the driven shaft.

## Description

The present invention relates to a transmission for use in elevators.

Transmissions provided with a worm screw and helical gear are frequently used for elevators: such units have components which require rather demanding production treatments as well as oil changes after a certain number of operating hours and entail rather significant periodic maintenance operations, since they include some rather expensive parts which are subjected to wear.

Conventional V-belt transmissions having a trapezoidal belt require the presence of elements adapted to keep the belts constantly subjected to a set tension during the operation of the transmission: the set tension must be maintained in order to be able to transmit the necessary energy even if the sides of the trapezoidal belts are worn out.

An aim of the present invention is to obviate the above-mentioned drawbacks of conventional devices.

A further aim of the invention is to provide a transmission, for use in elevators, wherein the components have reduced cost, assembly, and maintenance.

A further aim of the invention is to provide a transmission which does not require oil changes, and does not require the presence of belt tensioning elements during operation.

An object of the present invention is to achieve the above aim with a structure which is simple, relatively easy to provide in practice, safe in use, effective in operation, and has a relatively low cost.

These aims and objects and others are achieved by a transmission for use in elevators, characterized in that the driving shaft and the driven shaft are parallel to each other and are connected by at least two toothed belts closed in a loop and wound on respective pairs of toothed pinions and toothed pulleys which are keyed on the output shaft and on the driven shaft.

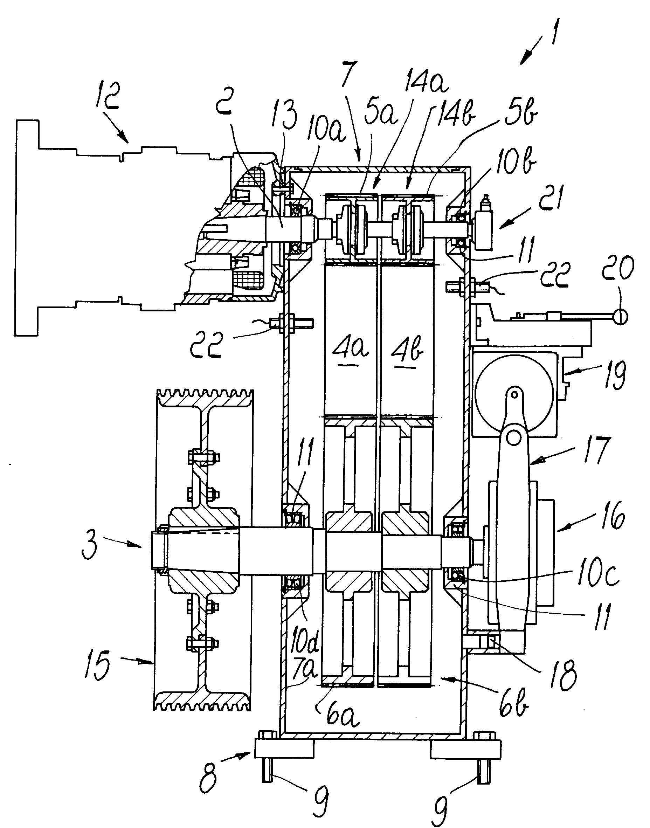

Further characteristics and advantages of the present invention will become apparent from the following detailed description of a preferred but not exclusive embodiment of a transmission for use in elevators, according to the invention, illustrated only by way of non-limitative example in the accompanying drawings, wherein the only figure is a partially sectional front view, taken along a median plane, of a transmission for use in elevators, according to the invention.

With particular reference to the figure, the reference numeral 1 generally designates a transmission for use in elevators according to the present invention.

The unit 1 has a driving or output shaft 2 and a driven or slow shaft 3 which are parallel to each other and are connected by at least two toothed belts 4a and 4b closed in a loop and wound around respective pairs of toothed pinions 5a, 5b and toothed pulleys 6a, 6b, which are keyed on the output and driven shafts.

The toothed pinions 5 and the toothed pulleys 6 are advantageously installed inside a containment and support casing 7 formed by two half-shells which are substantially symmetrical with respect to a plane passing through the axes of the shafts 2 and 3; the casing 7 has, at its base, a plurality of perforated feet 8 for the coupling of the reduction unit through bolts 9. Shafts 2 and 3 are installed in the casing by means of ball bearings or roller bearings 10a, 10b, 10c, and 10d, each being supported between pairs of half-seats 11 formed in the half-shells of the casing.

The reference numeral 12 designates a motor for the actuation of the driving shaft 2; the casing of the motor is preferably fixed by means of bolts 13 to the casing 7 or can be connected thereto through brackets or the like according to the type of motor. Toothed pinions 5a, 5b are keyed on the driving shaft 2 with the interposition of respective torque limiters 14a, 14b which are preferably of the clutch type.

As an alternative, it is possible to interpose torque limiters between the toothed pulleys 6a, 6b and the driven shaft 3 or at the input of the driving shaft, between the motor 12 and the driving shaft 2.

Advantageously, in order to allow easy installation of the belts 4a, 4b, the shaft 2 is supported by the bearings 10a, 10b by means of an eccentric bush, which is not illustrated in the figure because it is conventional technology, and allows to move the shafts 2 and 3 towards each other and away from each other in order to install and therefore correctly position the belts, in terms of tension, during assembly.

An elevator cable driving pulley 15 is mounted on the driven shaft 3 and a braking unit is mounted at the other end; in the example shown in the figure, said braking unit is of the drum type 16 with shoes 17 pivoted by means of the pivot 18 and actuated by an electromagnet 19: the reference numeral 20 designates the manual brake release lever.

In another embodiment, the braking unit may be of the disc type.

The driving pulley 15, which in the example shown in the figure is cantilevered, may also be installed so that it is supported on the outer side as well; the driving pulley may also include a braking drum whereon internal or external shoes can act, or may be rigidly coupled to a braking disc whereon corresponding calipers act.

Where allowed by statutory provisions, the braking unit may be of any kind and may act on the driving shaft or on the driven shaft or on the output shaft.

The reference numeral 21 designates an optional encoder or speedometer dynamo, which is installed on the output shaft and can be alternatively installed on the slow shaft.

Belt presence sensors 22 can be fixed to the casing 7; if they are provided, they are connected to the panel controlling the power supply of the motor and/or of the brake and are adapted to halt the unit if one of the belts breaks.

Reduction can be performed in two or more stages instead of in a single stage; in this case, at least one transmission shaft is present between the driving shaft and the driven shaft, and pairs of toothed pinions and toothed pulleys are keyed thereon and are connected respectively to the toothed pulleys and to the toothed pinions of the driven and driving shafts, respectively, by means of respective at least two pairs of toothed belts.

It has thus been shown that the transmission according to the invention achieves the intended aims and objects, having components with reduced cost, assembly, and maintenance, without requiring the presence of belt tensioners during operation.

The transmission according to the invention is susceptible of numerous modifications and variations, within the scope of the claims.

All the details may also be replaced with other technically equivalent ones.

In practice, the materials employed, as well as the shapes and the dimensions, may be any according to requirements without thereby abandoning the scope of the claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A transmission for use in elevators, characterized in that it comprises a driving shaft (2) and a driven shaft (3) parallel to each other and connected by at least two toothed belts (4a, 4b) closed in a loop and wound on respective pairs of toothed pinions (5a, 5b) and toothed pulleys (6a, 6b) which are keyed on the driving shaft (2) and on the driven shaft (3).

2. A transmission according to claim 1, characterized in that a drum-type braking unit (16) is installed on said driven shaft (3).

3. A transmission according to either claim 1 or 2, characterized in that a disc-type braking unit is installed on said driven shaft (3).

4. A transmission according to claim 1, characterized in that said toothed pinions (5a, 5b) are keyed on the driving shaft (2) with respective torque limiters (14a, 14b) interposed.

5. A transmission according to either claim 1 or 4, characterized in that said toothed pulleys (6a, 6b) are keyed on the driven shaft (3) with respective torque limiters interposed.

6. A transmission according to any of claim 1, 4 or 5, characterized in that a torque limiter is interposed at the input of the unit between the driving shaft (2) and the drive unit (12).

7. A transmission according to claim 1, characterized in that said toothed pinions (5a, 5b) and toothed pulleys (6a, 6b) are mounted inside a containment casing (7) provided by means of two half-shells.

8. A transmission according to claim 7, characterized in that said half-shells are substantially symmetrical with respect to a plane passing through the axes of said driving shaft (2) and said driven shaft (3) provided with said pinions (5a, 5b) and said pulleys (6a, 6b).

9. A transmission according to claim 1, characterized in that sensors (22) are provided for detecting the presence of said belts (4a, 4b), said sensors being connected to the power supply of the motor (12) and/or to the brake (16) and being adapted to stop the unit if one of the belts breaks.

10. A transmission according to claim 1, characterized in that at least one transmission shaft is provided between the driving shaft (2) and the driven shaft (3), pairs of toothed pinions and toothed pulleys being keyed on said transmission shaft, said pinions and pulleys being connected respectively to the toothed pulleys (6a, 6b) and to the toothed pinions (5a, 5b) of the driven shaft (3) and of the driving shaft (2) by means of respective at least two pairs of toothed belts.

11. A transmission according to claim 1, characterized in that at the output of the driven shaft (3) a driving pulley (15) is provided which includes a shoe-type braking drum.

12. A transmission according to claim either 1 or 11, characterized in that at the output of the driven shaft (3) a driving pulley (15) is provided which includes a braking disc.
